# EUROPEAN PATENT SPECIFICATION

(11) **EP 2 942 766 B1**
(45) Date of publication and mention of the grant of the patent: **13.12.2017**
(21) Application number: 15164973.8
(22) Date of filing: 24.04.2015
(51) Int. Cl.: G08G 1/16

(54) **METHOD FOR DETECTING THE PRESENCE OF A TRAILER**
VERFAHREN ZUR ERKENNUNG DER ANWESENHEIT EINES ANHÄNGERS
PROCÉDÉ POUR DÉTECTER LA PRÉSENCE D'UNE REMORQUE

(30) Priority: 07.05.2014 US 201414271650
(43) Date of publication of application: 11.11.2015
(73) Proprietor: ROBERT BOSCH GMBH, 70442 Stuttgart (DE)
(72) Inventor: Schwindt, Oliver, Novi, Michigan 48374 (US)
(74) Representative: Bee, Joachim

(56) References cited:
- DE-A1-102012 017 668
- JP-A- 2010 152 732
- US-A1- 2008 024 283
- US-B1- 6 446 998

## Description

The present invention relates to a method for detecting the presence of a trailer connected to a vehicle.

In the known prior art, U.S. Pat. No. 7,301,479 discloses a trailer detection circuit that detects the presence of a trailer and automatically disables a parking assist system. U.S. Pat. No. 7,786,849 discloses a trailer detection system for alerting a driver to the relative position of a trailer by sensing objects rearwardly and sidewardly from the vehicle and by sensing the steering angle of the vehicle. Document DE 10 2012 017 668 A1 discloses a sensor for a car with a trailer for detecting objects. Document JP 2010 152732 A discloses a towed-object connection detector and document US 6 446 998 B1 discloses a device for determining a distance between the back of a motor vehicle and an object located behind the motor vehicle.

### SUMMARY

The invention provides a method of detecting presence of a trailer being towed by a host vehicle as recited in claim 1 and a trailer detecting system including a trailer detecting unit for a host vehicle as recited in claim 7. Further advantageous embodiments are set out in the dependent claims. In one embodiment, the invention provides a method of detecting presence of a trailer being towed by a host vehicle comprising the steps of: determining velocity of the host vehicle; detecting velocity and distance of an object spaced outwardly from the rear of the host vehicle; and determining that the object comprises a trailer secured to the host vehicle when 1) the velocity of the host vehicle is greater than or equal to a minimum velocity value, 2) the velocity of the host vehicle is approximately the same as the velocity of the object, and 3) the distance of the object from the host vehicle remains constant.

In another embodiment, the step of determining velocity of the host vehicle comprises obtaining velocity from an electronic stability control unit over a communication bus and the step of detecting the velocity and the distance of the object comprises operating a rearward oriented radar sensor that senses reflection of a wave to determine velocity and distance.

Another embodiment includes the steps of informing the electronic stability control unit of the presence of a trailer and that the object is not determined as a trailer when the distance of the object from the host vehicle is greater than a maximum allowed distance.

In another embodiment, the steps are executed by an algorithm of the trailer detecting unit and a longitudinal axis of the host vehicle and a longitudinal axis of the trailer have a common axis while the host vehicle is driving in a straight line direction and the trailer detecting unit is configured to detect the presence of the trailer while driving in a straight line direction.

In another embodiment, the invention provides a trailer detecting system including a trailer detecting unit for a host vehicle, the trailer detecting unit storing and executing instructions that cause the trailer detecting unit to: receive a velocity of the host vehicle; receive a velocity of an object spaced outwardly from the rear of the host vehicle; receive a distance of the object spaced outwardly from the rear of the host vehicle in relation to the rear of the host vehicle; and determine that the object comprises a trailer secured to the host vehicle when 1) the velocity of the host vehicle is greater or equal to a minimum velocity value, 2) the velocity of the host vehicle is the same as the velocity of the object, and 3) the distance of the object from the host vehicle remains constant.

Other aspects of the invention will become apparent by consideration of the detailed description and accompanying drawings.

### BRIEF DESCRIPTION OF THE DRAWINGS

Fig. 1 is a block diagram of a trailer detecting system.
Fig. 2 is an overhead view of a trailer connected to a host vehicle.
Fig. 3 is a flowchart of a method for determining when a trailer is connected to a host vehicle.

### DETAILED DESCRIPTION

Before any embodiments of the invention are explained in detail, it is to be understood that the invention is not limited in its application to the details of construction and the arrangement of components set forth in the following description or illustrated in the following drawings. The invention is capable of other embodiments and of being practiced or of being carried out in various ways.

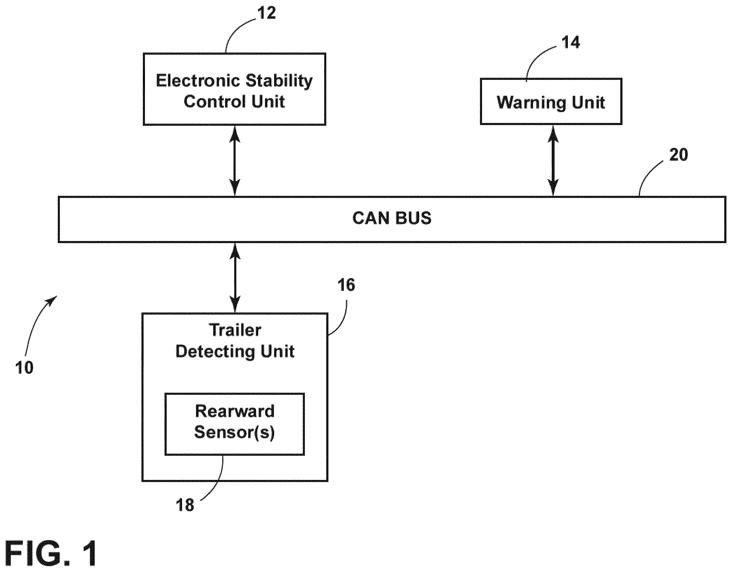

Fig. 1 shows a block diagram of a trailer detecting system 10 that includes an electronic stability control unit (ESC) 12, a warning unit 14, a trailer detecting unit 16 that includes rearward sensor(s) 18. A CAN (controller area network) bus 20 connects the devices and units for communication with each other. Additional vehicle systems utilizing the CAN bus 20, are not shown in Fig. 1.

The ESC unit 12 provides vehicle path driving data and information, such as host vehicle velocity and yaw-rate. The rearward sensor 18 is one or more radar modules, light detecting and ranging (LIDAR) modules, or video detection modules. The rearward sensor senses velocity and distance with respect to an object arranged nearby and rearwardly of a vehicle. For instance, the reflection of a radar wave or a light wave is detected to determine both a distance and a velocity.

A warning unit 14 outputs a visual warning to a display on the host vehicle 24 for various conditions of the host vehicle. In some constructions, the trailer detecting unit 16 is configured to transmit data to the warning unit 14 indicative of the presence of a trailer or other conditions. In some constructions, the warning unit 14 provides a chime or an audible message to a user.

In some constructions, the trailer detecting unit 16 comprises an electronic control unit (ECU) that includes a processor that has an executable program stored in a memory module, such as a ROM. The trailer detecting unit 16 also includes a RAM for storing information from other electronic control units that is received through the CAN bus 20. Non-transitory computer readable memory modules of the trailer detecting unit 16 include volatile memory, non-volatile memory, or a combination thereof and, in various constructions, may also store operating system software, applications/instructions data, and combinations thereof.

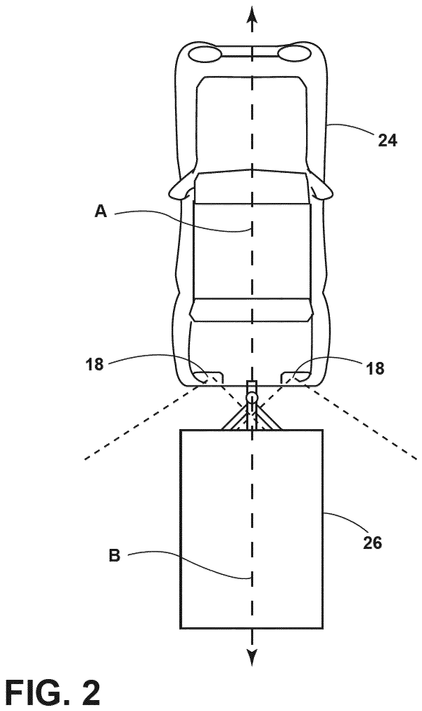

Fig. 2 shows rearward sensors 18 mounted on the rear end of a host vehicle 24. A trailer 26 shown in Fig. 2 is connected to the host vehicle 24. Fig. 2 illustrates a left rear sensor 18 disposed proximate the left rear edge or corner of the host vehicle 24 and a right rear sensor 18 disposed proximate the right rear edge or corner of the host vehicle. The field of view of each respective sensor 18 is represented in Fig. 2 as a dashed line. Further, in Fig. 2, a longitudinal axis A of the host vehicle 24 is essentially coaxial with a longitudinal axis B of the trailer 26 as the vehicle is moving in a straight line forward direction. Thus, the axes A, B, define a common shared axis, or the two axes are only offset vertically from each other.

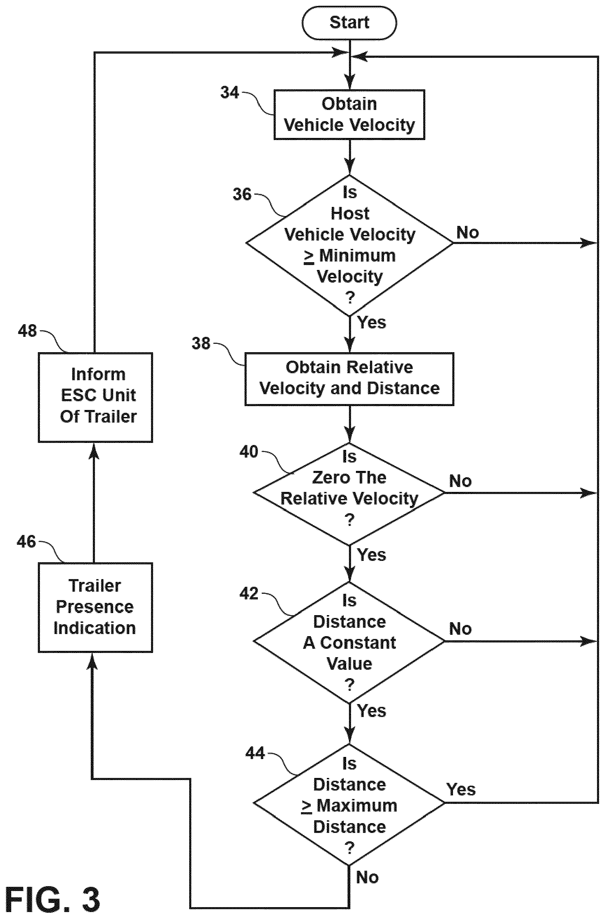

Fig. 3 is a flowchart 30 illustrating one method in which the trailer detecting system 10 of Fig. 1 monitors for the presence of a trailer 26 at the rear and adjacent the host vehicle 24. In the example of Fig. 3, operation of only one of the rearward sensors 18 is discussed. The other sensor 18 operates in a similar manner if multiple sensors are provided in an embodiment. The steps shown in Fig. 3 are for purposes of illustration, and thus the order of the steps can be changed in many instances while having no effect on execution of the program by the trailer detecting unit 16.

Upon starting of the algorithm illustrated by the flowchart in Fig. 3, at step 34, the ESC unit 12 provides a velocity of the host vehicle 24 to the trailer detecting unit 16. At decision step 36, the velocity of the host vehicle is compared with a defined minimum velocity value. If the measured velocity is not greater than or equal to the defined minimum velocity, the algorithm does not continue determining the presence of a trailer. By not sensing without a minimum velocity or speed for the host vehicle, a car stopped behind a stopped host vehicle will not be unintentionally determined as a trailer.

When a minimum velocity is sensed for the host vehicle, the program advances to step 38. At step 38, the sensor(s) 18 at the rear of the vehicle 24 senses velocity and distance of an object from the rear of the vehicle. The program advances to step 40.

At decision step 40, the measured velocity of the host vehicle 24 is compared to the velocity of the trailer or object sensed by the sensor 18. If the processor of the trailer detecting unit 16 determines the velocities are different, the algorithm returns to step 24 as a trailer is not attached to the host vehicle 24. When the velocities are the same, the algorithm advances to step 42.

At decision step 42, the program determines whether the distance value provided by the sensor 18 on the vehicle is changing or essentially constant. If the distance changes and does not remain constant, the program returns to step 34 and starts executing the algorithm again to determine the presence of a trailer.

At step 42, when the distance value provided by the trailer detecting unit is constant over a defined time period indicating the presence of a trailer, the program advances to step 44. At decision step 44, the program decides if the measured distance is greater than a maximum defined distance. If the measured distance is greater, a trailer is not present and the program restarts. When the measured distance is not greater than the maximum defined distance, the program advances to step 46. At step 46, a trailer presence indication is provided. The trailer detecting unit 16 is configured to provide information indicating the trailer presence to other electronic control units on the CAN bus 20 of the host vehicle 24. At step 48, the trailer presence is provided to the ESC unit 12. The ESC unit 12 is configured to adjust stability control features in the event the trailer 26 is connected to the host vehicle 24.

In another construction, the trailer presence indication is provided to a vehicle driver assistance system (not shown) that provides indications to the warning unit 14 when vehicles are approaching the host vehicle 24 from the rear thereof. Collision avoidance systems would change operation due to the presence of a trailer 26 connected to the host vehicle 24. Further, in some constructions, the trailer detecting unit 16 includes a driver assistance system or is a part of a driver assistance system. In one construction, the trailer detecting unit 16 includes an algorithm that is executed on a processor of a driver assistance system intended to provide collision warnings to the operator of the host vehicle.

Thus, the invention provides, among other things, a method and arrangement for detecting the presence of a trailer hitched to a host vehicle. The information is utilized by the vehicle for various purposes, such as to adjust operation of the ESC unit. Various features and advantages of the invention are set forth in the following claims.

## Claims

1. A method of detecting presence of a trailer being towed by a host vehicle (24) comprising the steps of:
determining velocity of the host vehicle (24);
detecting velocity and distance of an object (26) spaced outwardly from the rear of the host vehicle (24); and
determining that the object (26) comprises a trailer (26) secured to the host vehicle (24) when 1) the velocity of the host vehicle (24) is greater than or equal to a minimum velocity value, 2) the velocity of the host vehicle (24) is the same as the velocity of the object (26), 3) the distance of the object (26) from the host vehicle (24) remains constant, and 4) the distance of the object (26) from the host vehicle (24) is less than or equal to a maximum allowed distance.

2. The method according to claim 1, wherein the step of determining velocity of the host vehicle (24) comprises obtaining velocity from an electronic stability control unit (12) over a communication bus (20).

3. The method according to claim 1, wherein the step of detecting velocity and distance of the object (26) comprises operating a rearward oriented radar sensor (18) that senses reflection of a wave to determine velocity and distance.

4. The method according to claim 2, including the step of informing the electronic stability control unit (12) of the presence of a trailer (26).

5. The method of claim 1, wherein the steps are executed by an algorithm of a trailer detecting unit (16).

6. The method of claim 1, wherein a longitudinal axis (A) of the host vehicle (24) and a longitudinal axis (B) of the trailer (26) have a common axis while the host vehicle (24) is driving in a straight line direction and the trailer detecting unit (16) is configured to detect the presence of the trailer (26) while driving in a straight line direction.

7. A trailer detecting system including a trailer detecting unit (16) for a host vehicle (24), the trailer detecting unit (16) storing and executing instructions that cause the trailer detecting unit (16) to:
receive a velocity of the host vehicle (24);
receive a velocity of an object (26) spaced outwardly from the rear of the host vehicle (24);
receive a distance of the object (26) spaced outwardly from the rear of the host vehicle (24) in relation to the rear of the host vehicle (24); and
determine that the object (26) comprises a trailer (26) secured to the host vehicle (24) when 1) the velocity of the host vehicle (24) is greater or equal to a minimum velocity value, 2) the velocity of the host vehicle (24) is the same as the velocity of the object (26), 3) the distance of the object (26) from the host vehicle (24) remains constant, and 4) the distance of the object (26) from the host vehicle (24) is less than or equal to a maximum allowed distance.

8. The trailer detecting system according to claim 7, further comprising; a communication bus (20) and an electronic stability control unit (12),
wherein the trailer detecting unit (16) receives the velocity of the host vehicle (24) from the electronic stability control unit (12) via the communication bus (20).

9. The trailer detecting system according to claim 8, further comprising a rearward sensor (18) disposed at the rear of the host vehicle (24), the rearward sensor (18) providing the velocity and the distance of the object (26) spaced outwardly from the rear of the host vehicle (24) to the trailer detecting unit (16) via the communication bus (20).

10. The trailer detecting system according to claim 9, wherein the rearward sensor (18) comprises at least one of a radar sensor, a lidar sensor and a video sensor.

11. The trailer detecting system according to claim 7, further comprising a rearward sensor (18) disposed at the rear of the host vehicle (24), the rearward sensor (18) providing the velocity and the distance of the object (26) spaced outwardly from the rear of the host vehicle (24).

12. The trailer detecting system according to claim 7, further comprising; a communication bus (20) and an electronic stability control unit (12),
wherein the trailer detecting unit (16) receives the velocity of the host vehicle (24) from the electronic stability control unit (12) via the communication bus (20), and wherein the trailer detecting unit (16) is configured to inform the electronic stability control unit (12) of the presence of a trailer (26) via the communication bus (20).

13. The trailer detecting system according to claim 7, wherein the trailer detecting unit (16) is configured to detect the presence of the trailer when the host vehicle (24) is moving in a forward direction and a longitudinal axis (B) of the trailer is essentially coaxial with a longitudinal axis (A) of the host vehicle (24).

## Patentansprüche

1. Verfahren zur Erkennung der Anwesenheit eines von einem Host-Fahrzeug (24) gezogenen Anhängers, das folgende Schritte umfasst:
Bestimmen einer Geschwindigkeit des Host-Fahrzeugs (24);
Erkennen von Geschwindigkeit und Entfernung eines Objekts (26), das von dem Heck des Host-Fahrzeugs (24) nach außen beabstandet ist; und
Bestimmen, dass das Objekt (26) einen Anhänger (26) aufweist, der an dem Host-Fahrzeug (24) befestigt ist, wenn 1) die Geschwindigkeit des Host-Fahrzeugs (24) größer als oder gleich einem Geschwindigkeitsmindestwert ist, 2) die Geschwindigkeit des Host-Fahrzeugs (24) die gleiche wie die Geschwindigkeit des Objekts (26) ist, 3) die Entfernung des Objekts (26) von dem Host-Fahrzeug (24) konstant bleibt und 4) die Entfernung des Objekts (26) von dem Host-Fahrzeug (24) kleiner als oder gleich einer maximal zugelassenen Entfernung ist.

2. Verfahren nach Anspruch 1, wobei der Schritt des Bestimmens einer Geschwindigkeit des Host-Fahrzeugs (24) Erhalten einer Geschwindigkeit von einer elektronischen Stabilitätssteuerungseinheit (12) über einen Kommunikationsbus (20) umfasst.

3. Verfahren nach Anspruch 1, wobei der Schritt des Erkennens von Geschwindigkeit und Entfernung des Objekts (26) Betreiben eines nach hinten ausgerichteten Radarsensors (18) umfasst, der eine Reflexion einer Welle abtastet, um Geschwindigkeit und Entfernung zu bestimmen.

4. Verfahren nach Anspruch 2, das den Schritt des Benachrichtigens der elektronischen Stabilitätssteuerungseinheit (12) über die Anwesenheit eines Anhängers (26) umfasst.

5. Verfahren nach Anspruch 1, wobei die Schritte durch einen Algorithmus einer Anhängererkennungseinheit (16) ausgeführt werden.

6. Verfahren nach Anspruch 1, wobei eine Längsachse (A) des Host-Fahrzeugs (24) und eine Längsachse (B) des Anhängers (26) eine gemeinsame Achse aufweisen, während das Host-Fahrzeug (24) in einer geradlinigen Richtung fährt, und die Anhängererkennungseinheit (16) konfiguriert ist, die Anwesenheit des Anhängers (26) während eines Fahrens in einer geradlinigen Richtung zu erkennen.

7. Anhängererkennungssystem, das eine Anhängererkennungseinheit (16) für ein Host-Fahrzeug (24) aufweist, wobei die Anhängererkennungseinheit (16) Anweisungen speichert und ausführt, die die Anhängererkennungseinheit (16) veranlassen:
eine Geschwindigkeit des Host-Fahrzeugs (24) zu empfangen;
eine Geschwindigkeit eines Objekts (26), das von dem Heck des Host-Fahrzeugs (24) nach außen beabstandet ist, zu empfangen;
eine Entfernung des Objekts (26), das von dem Heck des Host-Fahrzeugs (24) nach außen beabstandet ist, in Bezug auf das Heck des Host-Fahrzeugs (24) zu empfangen; und
zu bestimmen, dass das Objekt (26) einen Anhänger (26) aufweist, der an dem Host-Fahrzeug (24) befestigt ist, wenn 1) die Geschwindigkeit des Host-Fahrzeugs (24) größer als oder gleich einem Geschwindigkeitsmindestwert ist, 2) die Geschwindigkeit des Host-Fahrzeugs (24) die gleiche wie die Geschwindigkeit des Objekts (26) ist, 3) die Entfernung des Objekts (26) von dem Host-Fahrzeug (24) konstant bleibt und 4) die Entfernung des Objekts (26) von dem Host-Fahrzeug (24) kleiner als oder gleich einer maximal zugelassenen Entfernung ist.

8. Anhängererkennungssystem nach Anspruch 7, das ferner Folgendes aufweist: einen Kommunikationsbus (20) und eine elektronische Stabilitätssteuerungseinheit (12),
wobei die Anhängererkennungseinheit (16) die Geschwindigkeit des Host-Fahrzeugs (24) von der elektronischen Stabilitätssteuerungseinheit (12) über den Kommunikationsbus (20) empfängt.

9. Anhängererkennungssystem nach Anspruch 8, das ferner einen Rückwärtssensor (18) aufweist, der an dem Heck des Host-Fahrzeugs (24) angeordnet ist, wobei der Rückwärtssensor (18) der Anhängererkennungseinheit (16) die Geschwindigkeit und die Entfernung des Objekts (26), das von dem Heck des Host-Fahrzeugs (24) nach außen beabstandet ist, über den Kommunikationsbus (20) bereitstellt.

10. Anhängererkennungssystem nach Anspruch 9, wobei der Rückwärtssensor (18) mindestens einen von einem Radarsensor, einem Lidarsensor und einem Videosensor aufweist.

11. Anhängererkennungssystem nach Anspruch 7, das ferner einen Rückwärtssensor (18) aufweist, der an dem Heck des Host-Fahrzeugs (24) angeordnet ist, wobei der Rückwärtssensor (18) die Geschwindigkeit und die Entfernung des Objekts (26), das von dem Heck des Host-Fahrzeugs (24) nach außen beabstandet ist, bereitstellt.

12. Anhängererkennungssystem nach Anspruch 7, das ferner Folgendes aufweist: einen Kommunikationsbus (20) und eine elektronische Stabilitätssteuerungseinheit (12),
wobei die Anhängererkennungseinheit (16) die Geschwindigkeit des Host-Fahrzeugs (24) von der elektronischen Stabilitätssteuerungseinheit (12) über den Kommunikationsbus (20) empfängt, und wobei die Anhängererkennungseinheit (16) konfiguriert ist, die elektronische Stabilitätssteuerungseinheit (12) über den Kommunikationsbus (20) über die Anwesenheit eines Anhängers (26) zu informieren.

13. Anhängererkennungssystem nach Anspruch 7, wobei die Anhängererkennungseinheit (16) konfiguriert ist, die Anwesenheit des Anhängers zu erkennen, wenn sich das Host-Fahrzeug (24) in einer Vorwärtsrichtung bewegt und eine Längsachse (B) des Anhängers im Wesentlichen koaxial zu einer Längsachse (A) des Host-Fahrzeugs (24) ist.

## Revendications

1. Procédé de détection de la présence d'une remorque remorquée par un véhicule hôte (24), comprenant les étapes consistant à :
déterminer la vitesse du véhicule hôte (24) ;
détecter la vitesse et la distance d'un objet (26) espacé vers l'extérieur de l'arrière du véhicule hôte (24) ; et
déterminer que l'objet (26) comprend une remorque (26) fixée au véhicule hôte (24) quand 1) la vitesse du véhicule hôte (24) est supérieure ou égale à une valeur minimale de vitesse, 2) la vitesse du véhicule hôte (24) est la même que la vitesse de l'objet (26), 3) la distance de l'objet (26) par rapport au véhicule hôte (24) reste constante, et 4) la distance de l'objet (26) par rapport au véhicule hôte (24) est inférieure ou égale à une distance autorisée maximale.

2. Procédé selon la revendication 1, dans lequel l'étape de détermination de la vitesse du véhicule hôte (24) consiste à obtenir la vitesse à partir d'une unité de contrôle électronique de stabilité (12) sur un bus de communication (20).

3. Procédé selon la revendication 1, dans lequel l'étape de détection de la vitesse et de la distance de l'objet (26) consiste à faire fonctionner un capteur radar orienté vers l'arrière (18) détectant la réflexion d'une onde pour déterminer la vitesse et la distance.

4. Procédé selon la revendication 2, comprenant l'étape consistant à informer l'unité de contrôle de stabilité électronique (12) de la présence d'une remorque (26).

5. Procédé selon la revendication 1, dans lequel les étapes sont exécutées par un algorithme d'une unité de détection de remorque (16).

6. Procédé selon la revendication 1, dans lequel un axe longitudinal (A) du véhicule hôte (24) et un axe longitudinal (B) de la remorque (26) ont un axe commun quand le véhicule hôte (24) circule en ligne droite, et dans lequel l'unité de détection de remorque (16) est conçue pour détecter la présence de la remorque (26) pendant la circulation en ligne droite.

7. Système de détection de remorque comprenant une unité de détection de remorque (16) pour un véhicule hôte (24), l'unité de détection de remorque (16) stockant et exécutant des instructions qui amènent l'unité de détection de remorque (16) à :
recevoir une vitesse du véhicule hôte (24) ;
recevoir une vitesse d'un objet (26) espacé vers l'extérieur de l'arrière du véhicule hôte (24) ;
recevoir une distance de l'objet (26) espacé vers l'extérieur de l'arrière du véhicule hôte (24) par rapport à l'arrière du véhicule hôte (24) ; et
déterminer que l'objet (26) comprend une remorque (26) fixée au véhicule hôte (24) quand 1) la vitesse du véhicule hôte (24) est supérieure ou égale à une valeur minimale de vitesse, 2) la vitesse du véhicule hôte (24) est la même que la vitesse de l'objet (26), 3) la distance de l'objet (26) par rapport au véhicule hôte (24) reste constante, et 4) la distance de l'objet (26) par rapport au véhicule hôte (24) est inférieure ou égale à une distance autorisée maximale.

8. Système de détection de remorque selon la revendication 7, comprenant en outre : un bus de communication (20) et une unité de contrôle de stabilité électronique (12),
l'unité de détection de remorque (16) recevant la vitesse du véhicule hôte (24) de l'unité de contrôle de stabilité électronique (12) par l'intermédiaire du bus de communication (20).

9. Système de détection de remorque selon la revendication 8, comprenant en outre un capteur arrière (18) disposé au niveau de l'arrière du véhicule hôte (24), le capteur arrière (18) fournissant la vitesse et la distance de l'objet (26) espacé vers l'extérieur de l'arrière du véhicule hôte (24) à l'unité de détection de remorque (16) par l'intermédiaire du bus de communication (20).

10. Système de détection de remorque selon la revendication 9, dans lequel le capteur arrière (18) comprend un capteur radar, un capteur lidar et/ou un capteur vidéo.

11. Système de détection de remorque selon la revendication 7, comprenant en outre un capteur arrière (18) disposé au niveau de l'arrière du véhicule hôte (24), le capteur arrière (18) fournissant la vitesse et la distance de l'objet (26) espacé vers l'extérieur de l'arrière du véhicule hôte (24).

12. Système de détection de remorque selon la revendication 7, comprenant en outre un bus de communication (20) et une unité de contrôle de stabilité électronique (12),
l'unité de détection de remorque (16) recevant la vitesse du véhicule hôte (24) en provenance de l'unité de contrôle de stabilité électronique (12) par l'intermédiaire du bus de communication (20), et l'unité de détection de remorque (16) étant conçue pour informer l'unité de contrôle de stabilité électronique (12) de la présence d'une remorque (26) par l'intermédiaire du bus de communication (20).

13. Système de détection de remorque selon la revendication 7, dans lequel l'unité de détection de remorque (16) est conçue pour détecter la présence de la remorque quand le véhicule hôte (24) se déplace en direction avant, et un axe longitudinal (B) de la remorque est essentiellement coaxial avec un axe longitudinal (A) du véhicule hôte (24).
